# EUROPÄISCHE PATENTSCHRIFT

(11) **EP 3 695 133 B1**
(45) Veröffentlichungstag und Bekanntmachung des Hinweises auf die Patenterteilung: **17.02.2021**
(21) Anmeldenummer: 19713726.8
(22) Anmeldetag: 19.03.2019
(51) Int. Cl.: F16D 65/10, B60T 1/06

(54) **MEHRTEILIGE BREMSTROMMEL**
MULTI-PART BRAKE DRUM
TAMBOUR DE FREIN EN PLUSIEURS PARTIES

(30) Priorität: 19.03.2018 DE 102018106297
(43) Veröffentlichungstag der Anmeldung: 19.08.2020
(73) Patentinhaber: SAF-HOLLAND GmbH, 63856 Bessenbach (DE)
(72) Erfinder: KREINER, Kerstin, 63741 Aschaffenburg (DE)
(74) Vertreter: Müller Schupfner & Partner Patent- und Rechtsanwaltspartnerschaft mbB
(86) Internationale Anmeldenummer: PCT/EP2019/056788
(87) Internationale Veröffentlichungsnummer: WO 2019/179989

(56) Entgegenhaltungen:
- WO-A2-2007/076156
- DE-A1-102009 032 008
- DE-A1-102011 054 484
- DE-A1-102015 114 551
- DE-A1-102015 212 017
- US-A- 2 558 297
- US-A- 2 588 665

## Beschreibung

Die Erfindung betrifft eine Bremstrommel, insbesondere für Nutzfahrzeuge.

Bremstrommeln sind bereits aus dem Stand der Technik bekannt, diese dienen dazu, mit Bremsbacken derart in Kontakt treten zu können, dass ein Bremsmoment um eine Achse entsteht, um ein Fahrzeug abzubremsen. Problematisch ist jedoch bei den aus dem Stand der Technik bekannten Bremstrommeln, dass diese durch die einseitige Fixierung während der Bremsung durch thermisch induzierte Spannungen einen Verzug erfahren, welcher auch als Aufschirmung bekannt ist. Diese Aufschirmung sorgt dafür, dass der vorgesehene Reibbereich der Bremstrommel nicht mehr vollständig mit der Bremsbacke in Kontakt treten kann. Hierdurch resultiert ein lokal stark schwankender Verschleiß der Bremstrommel, so dass Bremstrommeln vorzeitig ausgewechselt werden müssen. Zusätzlich bedingt die Aufschirmung den weiteren Nachteil, dass hierdurch die Neigung zu Rissbildung gefördert wird.

Die DE 10 2009 032 008 A1 betrifft eine als Gussteil ausgebildete Bremstrommel, mit einem zylindrischen Trommelmantel und einem angeschlossenen Flansch, zur Befestigung einer Radnabe, die so ausgebildet ist, dass der Trommelmantel und der Flansch stofflich voneinander getrennt sind und durch eingegossene Gleitelemente relativ zueinander radial bewegbar miteinander verbunden sind.

Die DE 10 2015 114 551 A1 zeigt eine Trommelbremse, umfassend eine Bremstrommel mit einem Anbindungsbereich zur Anordnung der Bremstrommel an einem Fahrzeugteil, wie einer Radnabe und einem Mantelbereich mit einer ersten Kontaktfläche und einem Reibbelag mit einer zum Mantelbereich hingewandten zweiten Kontaktfläche, wobei die erste und die zweite Kontaktfläche entlang bzw. in einer Radialebene gekrümmt sind.

Die DE 10 2011 054 484 A1 betrifft eine Bremstrommel für Fahrzeuge mit einem im Wesentlichen topfförmigen Grundkörper, der aus einem Leichtmetall gegossen wird, und einem Reibkörper, der an einer radialen Innenfläche des Grundkörpers befestigt ist, wobei der Reibkörper stoffschlüssig durch Reibschweißen mit dem Grundkörper verbunden wird.

Es ist somit Aufgabe der vorliegenden Erfindung, eine Bremstrommel bereitzustellen, welche die Auswirkungen der Aufschirmung minimiert.

Diese Aufgabe wird mit einer Bremstrommel gemäß dem Anspruch 1 gelöst, weitere Merkmale und vorteilhafte Ausführungsformen ergeben sich aus den Unteransprüchen.

Erfindungsgemäß ist eine Bremstrommel, insbesondere für Nutzfahrzeuge, drehbar um eine Rotationsachse gelagert oder ist dazu ausgelegt, drehbar um eine Rotationsachse gelagert zu werden, wobei die Bremstrommel eine Reibsektion und eine Anschlusssektion umfasst, wobei die Reibsektion eine Reibfläche und eine Vielzahl von Übertragungsstrukturen umfasst, wobei die Anschlusssektion zumindest eine Montagefläche und eine Vielzahl von Transferstrukturen umfasst, wobei die Transferstrukturen formschlüssig und/oder kraftschlüssig in die jeweils komplementären Übertragungsstrukturen greifen, so dass ein Drehmoment um die Rotationsachse formschlüssig übertragbar ist, und wobei die Montagefläche dazu dient, die Bremstrommel mittelbar oder unmittelbar an einer Nabe festzulegen. Die Rotationsachse, um die die Bremstrommel drehbar gelagert ist oder um die sie gelagert werden kann, ist insbesondere die Rotationsachse der Welle, der Achse oder der Nabe, welche mittels der erfindungsgemäßen Bremstrommel gebremst werden soll. Die Bremstrommel ist bevorzugt durch mehrere Bauteile aufgebaut, welche zweckmäßigerweise nicht stoffschlüssig miteinander verbunden sind. Insbesondere können die Reibsektionen und die Anschlusssektionen zwei separate Bauteile darstellen, welche vorteilhafterweise zwei verschiedene Bereiche der Bremstrommel entlang der Rotationsachse ausbilden. Die Reibsektion der Bremstrommel ist das Bauteil oder der Bereich der Bremstrommel, welcher dazu dient, ein Bremsmoment durch einen Kontakt mit einer oder einer Vielzahl von Bremsbacken erzeugen zu können. Hierzu verfügt die Reibsektion über zumindest eine Reibfläche, welche dazu ausgelegt ist, mit den statorseitigen Bremsbacken direkt in Kontakt treten zu können, um ein Bremsmoment um die Rotationsachse zu erzeugen. Die Reibfläche kann dabei eine einstückige Reibfläche oder in Subflächen unterteilt sein, wie es beispielsweise durch das Vorsehen von Nuten erreicht werden kann. Die Reibfläche ist zweckmäßigerweise, insbesondere bereichsweise, rotationssymmetrisch zu der Rotationsachse ausgestaltet und erstreckt sich vorteilhafterweise zumindest teilweise entlang der Rotationsachse. Besonders bevorzugt bildet die Reibfläche einen Teil einer Mantelfläche eines um die Rotationsachse rotationssymmetrisch ausgebildeten Zylinders oder Konuses aus. Die Reibfläche kann insbesondere derart gestaltet sein, dass diese zumindest teilweise konisch um die Rotationsachse ausgebildet ist. Hierdurch kann ein Abtransport von Dreck, Verunreinigungen und/oder Feuchtigkeit erzielt bzw. verbessert werden, sodass die Bremsleistung gesteigert werden kann. Zweckmäßigerweise weist die Reibfläche, insbesondere entlang der Rotationsachse, eine Vielzahl von konischen Bereichen auf. Vorteilhafterweise bildet zumindest einer, bevorzugt alle, konischen Bereiche einen Winkel zwischen 1° bis 5°, bevorzugt einen Winkel von 2° bis 4° und besonders bevorzugt einen Winkel von 3° mit der Rotationsachse aus. Vorteilhafterweise ist jeweils zwischen zwei konischen Bereichen ein Zwischenbereich ausgebildet, insbesondere ist der Zwischenbereich um die Rotationsachse zylindrisch ausgebildet, sodass ein möglichst weicher Übergang zwischen den konischen Bereichen erfolgen kann. Hierdurch kann insbesondere die Fertigung der Reibfläche vereinfacht werden. Besonders bevorzugt ist der Übergang zwischen einzelnen konischen Bereichen und/oder zwischen den Zwischenbereichen und dem angrenzenden konischen Bereich der Reibfläche stetig ausgebildet. In anderen Worten kann der Übergang derart ausgebildet sein, dass dieser keine Sprünge aufweist. Auch hierdurch kann die Fertigung der Bremstrommel stark vereinfacht werden. Besonders vorteilhaft ist es, wenn an der Reibfläche und/oder in den Zwischenbereichen Durchlässe, insbesondere Bohrungen, vorgesehen sind, welche die Reibsektion, insbesondere senkrecht zur Rotationsachse, vollständig durchdringen. In anderen Worten kann in der Reibfläche und/oder in den Zwischenbereichen ein Durchlass vorgesehen sein, welcher das Innere der Reibsektion mit der Umgebung verbindet. Hierdurch kann Dreck, Feuchtigkeit und/oder Bremsstaub in die Umgebung transportiert werden. Alternativ oder zusätzlich bevorzugt können solche Durchlässe sich auch von anderen Flächen der Reibsektion erstrecken, insbesondere von einer Innenfläche, der Reibsektion. Bevorzugt ist es jedoch, um den Abtransport durch die Durchbrüche zu verbessern, wenn die zu den Durchbrüchen benachbarten konischen Bereiche auf die Durchbrüche zulaufend ausgestaltet sind. In anderen Worten kann dies bedeuten, dass die Durchbrüche in den Bereichen der konischen Bereiche oder in den Zwischenbereichen angeordnet sind, welche weiter von der Rotationsachse beabstandet sind als die benachbarten Bereiche. Um ein Drehmoment, insbesondere das Bremsmoment, um die Rotationsachse, formschlüssig auf die Anschlusssektion zu übertragen, verfügt die Reibsektion über eine Vielzahl von Übertragungsstrukturen. Diese Übertragungsstrukturen greifen dabei formschlüssig in jeweils komplementäre Transferstrukturen der Anschlusssektion ein, um das Drehmoment um die Rotationsachse sicher zu übertragen. Diese Übertragungsstrukturen und/oder die komplementären Transferstrukturen können einstückig mit der Reibsektion bzw. der Anschlusssektion ausgestaltet sein, beispielsweise durch das gleichzeitige Ausbilden beim Herstellen, insbesondere beim Gießen, der Transferstrukturen mit der Anschlusssektion und/oder den Übertragungsstrukturen mit der Reibsektion. Durch diese Einstückigkeit kann eine mechanisch besonders stabile Verbindung erreicht werden. Beispielsweise können die Übertragungsstrukturen als ein in Umfangsrichtung durchgängiger Kranz ausgebildet sein, welcher z.B. radial verlaufende Lamellen aufweist, wobei diese Lamellen in komplementär ausgebildete Transferstrukturen eingreifen, wobei diese Transferstrukturen ebenfalls als radial verlaufende Lamellen ausgebildet sein können. Alternativ oder zusätzlich bevorzugt können die Übertragungsstrukturen auch als separate Teile ausgebildet sein, beispielsweise als Bolzen und/oder durch Zwischenelemente. Diese Zwischenelemente können z.B. Bolzen oder Schrauben sein, welche in die Anschlusssektion eingeschraubt oder eingegossen sind. Vorteilhafterweise erstrecken sich diese Zwischenelemente dabei parallel zur Rotationsachse oder in die radiale Richtung. Vorteilhafterweise können zumindest Teile der Reibsektion und/oder der Anschlusssektion mit einer keramischen Beschichtung versehen sein. Hierdurch kann die Wärmeleitung, insbesondere zwischen der Reibsektion und der Anschlusssektion, behindert werden. Bevorzugt sind die Kontaktflächen der Übertragungsstrukturen und/oder der Transmissionsstrukturen mit einer keramischen Beschichtung versehen, insbesondere die Bereiche, welche das/die Zwischenelement(e) und/oder die Reibsektion und/oder die Anschlusssektion kontaktieren. Hierdurch kann besonders effektiv der Wärmeübergang zwischen der Reibsektion und der Anschlusssektion behindert werden, sodass eine thermische Verformung der Anschlusssektion minimiert wird. Komplementär sind Transferstrukturen und Übertragungsstrukturen insbesondere dann, wenn diese nächstliegend zueinander angeordnet sind und/oder kontaktieren. Die Transferstrukturen und die Übertragungsstrukturen können in einer beispielhaften Ausführungsform wie eine Verzahnung und oder als komplementäre Kränze derart ineinander greifen, dass ein Drehmoment um die Rotationsachse formschlüssig übertragen werden kann. Zweckmäßigerweise verfügt die Bremstrommel über 3 bis 20 Transferstrukturen und jeweils komplementäre Übertragungsstrukturen, bevorzugt über 5 bis 16 und besonders bevorzugt über 6 bis 10, um eine sichere Drehmomentübertragung zu erreichen. Bevorzugt kontaktieren die Übertragungsstrukturen mit den Transferstrukturen unmittelbar, um eine möglichst verschleißarme und sichere Drehmomentübertragung zu erreichen. Alternativ bevorzugt können zwischen komplementären Übertragungsstrukturen und Transferstrukturen auch Zwischenelemente angeordnet sein, wobei die Zwischenelemente insbesondere zur Dämpfung von Schwingungen und/oder zum Behindern von Korrosion ausgelegt sein können. Besonders bevorzugt sind die Zwischenelemente zumindest teilweise, bevorzugt vollständig, aus einem viskosen Material gefertigt, wie Beispielsweise aus einem Polymer oder einem Gummi. Die Anschlusssektion, welche die Transferstrukturen umfasst, dient unter anderem dazu, das von der Reibsektion aufgenommene Drehmoment über die Montagefläche an eine Nabe zu übertragen. Zusätzlich kann die Anschlusssektion auch zur Lagerung der Bremstrommel ausgelegt sein und somit nicht nur Drehmomente sondern auch Kräfte auf die Nabe übertragen. Die Montagefläche selbst kann durch eine zusammenhängende Fläche oder durch mehrere nicht zusammenhängende Subflächen gebildet sein. Die Montagefläche, bzw. deren Subflächen, weist bevorzugt eine Normale auf, welche im Wesentlichen parallel zur Rotationsachse ausgerichtet ist, um eine einfache Montage und eine bauraumsparende Bremstrommel zu erreichen. Zweckmäßigerweise verfügt die Montagefläche über Montageöffnungen, mittels welcher die Montagefläche bzw. die Anschlusssektion relativ zu der Nabe festgelegt werden kann. Die Montageöffnungen sind dabei dazu ausgelegt, Montage- und/oder Spannelemente, wie z.B. Schrauben, Bolzen oder Nieten, aufzunehmen um die Bremstrommel an der Nabe festzulegen und/oder zu verspannen. Die Montageöffnungen sind bevorzugt zumindest bereichsweise, insbesondere vollständig, rund ausgebildet, so dass diese kostengünstig hergestellt werden können. Um eine besonders einfache und kostengünstige Fertigung zu erreichen, erstrecken sich die Montageöffnungen im Wesentlichen parallel zur Rotationsachse und/oder senkrecht von der Montagefläche. Die Nabe, an welcher die Montagefläche der Anschlusssektion mittelbar oder unmittelbar festgelegt ist bzw. werden kann, kann beispielsweise durch eine Radnabe, ein Radlagergehäuse, eine Achse und/oder eine Welle - bzw. Bestandteile von diesen Bauteilen - gebildet sein. Durch die erfindungsgemäße Ausgestaltung der Bremstrommel wird erreicht, dass die einzelnen Bestandteile der Bremstrommel, insbesondere die Reibsektion relativ zur Anschlusssektion, eine gewisse Flexibilität aufweisen, so dass die Auswirkungen des thermisch bedingten Verzugs (Aufschirmung) minimiert werden können.

Bevorzugt ist zumindest eine Übertragungsstruktur relativ zu der jeweils komplementären Transferstruktur in eine radiale Richtung verlagerbar, insbesondere in die positive radiale Richtung. Die radiale Richtung ist diejenige Richtung, welche senkrecht zu der Rotationsachse steht, wobei die positive Richtung insbesondere diejenige Richtung ist, welche von der Rotationsachse weg weist. Relativ zueinander verlagerbar ist eine Übertragungsstruktur zu der jeweils komplementären Transferstruktur insbesondere dann, wenn die Transferstruktur für sich betrachtet, in Relation zur Übertragungsstruktur verlagert werden kann ohne dass dies, insbesondere durch die Übertragungsstruktur, formschlüssig verhindert wird. In einer beispielhaften Ausführungsform kann dies dadurch erreicht werden, dass die Übertragungsstruktur als eine radial nach außen gerichtete Ausnehmung ausgestaltet ist, in welcher die Transferstruktur der Anschlusssektion formschlüssig - entlang der Erstreckung der Übertragungsstruktur - geführt ist. In anderen Worten kann die Übertragungsstruktur wie eine Art Zylinder um die Transferstruktur (als Kolben) ausgebildet sein, so dass eine relative Verlagerung der beiden Strukturen zueinander stattfinden kann. Durch diese Art der Ausgestaltung der Übertragungsstruktur und der Transferstruktur kann der thermisch bedingten Aufweitung der Reibsektion, insbesondere in Richtung der radialen Richtung, derart entgegengewirkt werden, dass die thermisch induzierten Verformungen keine bzw. eine nur sehr geringe Auswirkung auf die mechanische Belastung der Übertragungsstruktur und der Transferstruktur haben. Bevorzugt ist der überwiegende Teil der Übertragungsstrukturen, insbesondere alle, relativ zu der jeweils komplementären Transferstruktur in die radiale Richtung verlagerbar zueinander. Hierdurch kann die thermisch induzierte mechanische Belastung der Bremstrommel in besonders effektiver Weise reduziert werden.

Erfindungsgemäß erstrecken sich die Transferstrukturen von einer Anschlagsfläche aus, insbesondere in Richtung der Rotationsachse. Die Anschlagsfläche ist eine Fläche, welche mittel- oder unmittelbar mit einer korrespondierenden Fläche der Reibsektion kontaktiert und nicht Teil einer Transferstruktur ist. In anderen Worten kann die Anschlagsfläche eine Fläche sein, welche nicht zur formschlüssig Drehmomentübertragung geeignet ist. Insbesondere bevorzugt weist die Anschlagsfläche eine Normale auf, welche im Wesentlichen parallel zur Rotationsachse ist. Hierdurch wird unter anderem eine besonders kompakte Bremstrommel in Richtung der Rotationsachse erreicht. Im Wesentlichen parallel bedeutet, dass zwischen den beiden maßgeblichen Richtungen ein Winkel von +/- 15°, bevorzugt von +/- 10°, besonders bevorzugt von +/- 5°, und besonders stark bevorzugt von +/- 2°, liegen darf, um als im Wesentlichen parallel zu einander zu gelten. Durch das Erstrecken der Transferstruktur von der Anschlagsfläche aus wird erreicht, dass die Bremstrommel nur einen geringen Bauraumbedarf aufweist.

Bevorzugt weist die Anschlusssektion Verspannungsöffnungen auf, welche dazu ausgelegt sind, Spannmittel aufzunehmen, um die Reibsektion mit der Anschlusssektion, insbesondere in Richtung der Rotationsachse, zu verspannen. Spannmittel können beispielsweise Schrauben, Nieten, Bolzen oder Stifte sein. Die Verspannungsöffnungen erstrecken sich bevorzugt von der Anschlagsfläche aus und sind im Wesentlichen parallel zur Rotationsachse ausgerichtet. Die Reibsektion kann Verspannungsausnehmungen aufweisen, um die Spannmittel aufzunehmen. Durch das Verspannen der Reibsektion mit der Anschlusssektion kann erreicht werden, dass eine gewisse Zentrierung und/oder ein Widerstand gegen eine Verlagerung zwischen der Reibsektion und der Anschlagssektion sichergestellt werden kann. Besonders bevorzugt weisen die Spannmittel dabei ein Spiel, insbesondere radial um die Spannmittel herum, zu den Verspannungsöffnungen auf, so dass auch bei einer thermisch bedingten Aufweitung von Bestandteilen der Bremstrommel, insbesondere der Reibsektion, keine formschlüssigen Kräfte und/oder Momente von den Spannmitteln unmittelbar auf die Verspannungsöffnungen der Anschlusssektion übertragen werden können. Hierdurch sinken die Belastungen der Spannmittel, so dass diese geringer dimensioniert werden können und somit Gewicht eingespart werden kann.

Zweckmäßigerweise weisen die Transferstrukturen je zumindest einen Verzahnungsbereich auf, welcher sich in eine radiale Richtung erstreckt, und wobei die Verzahnungsbereiche dazu ausgelegt sind, das Drehmoment um die Rotationsachse auf die komplementäre Übertragungsstruktur zu übertragen. Hierdurch wird die relative Verlagerbarkeit zwischen der Transferstruktur und der Übertragungsstruktur verbessert, so dass die Auswirkung der Aufschirmung weiter reduziert werden können. Der Verzahnungsbereich ist insbesondere der Bereich der Transferstruktur, welcher dazu ausgelegt ist, formschlüssig das Drehmoment um die Rotationsachse zu übertragen. Vorteilhafterweise begrenzen die Verzahnungsbereiche dabei die Transferstruktur in Richtung der radialen Richtung und/oder in Richtung der Rotationsachse. In anderen Worten kann dies bedeuten, dass die Verzahnungsbereiche die Endabschnitte der Transferstrukturen ausbilden.

Vorteilhafterweise weist zumindest eine Transferstruktur, insbesondere im Verzahnungsbereich, einen im Wesentlichen parallelogrammen Querschnitt auf. Durch diese Ausgestaltung des Querschnitts der Transferstruktur kann eine besonders geringe lokale Flächenpressung erreicht werden. Die maßgebliche Querschnittsfläche liegt insbesondere in einer Ebene, deren Normale im Wesentlichen parallel zu der radialen Richtung oder der Rotationsachse ist. Im Wesentlichen parallelogramm ist ein Querschnitt insbesondere dann, wenn der Querschnitt zwei Pärchen von gegenüberliegenden distal begrenzenden ebenen Flächen aufweist, wobei die gegenüberliegenden Flächen im Wesentlichen parallel zueinander sind. Unerheblich ist dabei, ob die Flächen zu den benachbarten Flächen durch eine Rundung und/oder durch eine Phase begrenzt sind. Lediglich entscheidend ist, dass die gegenüberliegenden Flächen im Wesentlichen parallel zueinander orientiert sind. Im Wesentlichen parallel sind zwei Flächen in diesem Zusammenhang insbesondere dann zueinander orientiert, wenn dessen (richtungsunabhängige) Normalen in der maßgebenden Schnittebene im Wesentlichen parallel zueinander orientiert sind.

Vorteilhafterweise ist zumindest eine Übertragungsstruktur, bevorzugt alle Übertragungsstrukturen, durch eine Ausnehmung oder durch einen Vorsprung gebildet, welche bzw. welcher sich in Richtung der radialen Richtung erstreckt. Durch diese Ausgestaltung der Übertragungsstruktur wird erreicht, dass diese kostengünstig hergestellt werden kann.

Alternativ oder zusätzlich bevorzugt weist zumindest eine Transferstruktur, bevorzugt alle Transferstrukturen, und/oder eine Übertragungsstruktur einen im Wesentlichen kreisrunden oder v-förmigen Querschnitt auf. Durch diese geometrische Ausgestaltung kann eine Zentrierwirkung erreicht werden, sodass eine besonders sichere Führung der Reibsektion erreicht wird. Die maßgebliche Querschnittsfläche liegt insbesondere in einer Ebene, deren Normale im Wesentlichen parallel zu der radialen Richtung oder der Rotationsachse ist. Ein im Wesentlichen kreisrunder Querschnitt liegt insbesondere dann vor, wenn der Querschnitt bis auf den Anschluss an den Rest der Reibsektion kreisrund ausgebildet ist. Ein v-förmiger Querschnitt hingegen liegt insbesondere dann vor, wenn der Querschnitt derart gestaltet ist, dass dieser v-förmig auf den Teil zuläuft, welcher die Transferstruktur mit dem Rest der Reibsektion verbindet.

In einer bevorzugten Ausführungsform erstreckt sich zumindest eine Übertragungsstruktur von einer Innenfläche aus, wobei die Innenfläche die Reibsektion zumindest bereichsweise zur Rotationsachse hin begrenzt. Die Innenfläche ist dabei bevorzugt eine separate Fläche von der Reibfläche, welche insbesondere durch eine Nut, einen Vor- oder Rücksprung von der Reibfläche abgegrenzt ist. Hierbei kann die Innenfläche die Übertragungsstruktur zumindest teilweise, bevorzugt vollständig, umschließen bzw. begrenzen. Durch die Erstreckung der Übertragungsstrukturen von der Innenfläche aus kann erreicht werden, dass die Bremstrommel eine besonders kompakte Bauweise in Richtung der Rotationsachse aufweist.

Bevorzugt sind die Übertragungsstrukturen und/oder die Transferstrukturen in eine Umfangsrichtung paarweise angeordnet. Die Umfangsrichtung ist die polare Koordinate um die Rotationsachse. In anderen Worten können die Rotationsachse, die radiale Richtung und die Umfangsrichtung somit ein Zylinderkoordinatensystem ausbilden, wobei die axiale Richtung die Höhenkoordinate, die radiale Richtung die radiale Koordinate und die Umfangsrichtung die polare Koordinate bilden. Paarweise sind Transferstrukturen und/oder Übertragungsstrukturen dann ausgebildet, wenn eine benachbarte Übertragungsstruktur bzw. Transferstruktur näher in Umfangsrichtung liegt als die andere benachbarte Übertragungsstruktur bzw. Transferstruktur. Alternativ oder zusätzlich kann eine paarweise Anordnung auch dadurch charakterisiert sein, dass der Winkel um die Rotationsachse bzw. in Umfangsrichtung, welcher ein Paar umgibt, kleiner ist als der Winkel, welcher den Zwischenraum zwischen zwei benachbarten Paar umgibt. Durch die geringe Strecke zwischen den paarweise angeordneten Übertragungsstrukturen bzw. Transferstrukturen sind die resultierenden Belastungen aufgrund thermisch induzierter Spannungen gering auf die Übertragungs- bzw. Transferstrukturen. Besonders bevorzugt ist es, wenn die Übertragungsstrukturen in Umfangsrichtung (positiv und/oder negativ) wegweisend von dem Paar spielbehaftet sind. Hierdurch ist es möglich, dass sich das Paar in Umfangsrichtung ausbreiten kann, ohne dass eine Verspannung stattfindet. Zusätzlich oder alternativ bevorzugt sollte zu mindestens eine der Verspannungsöffnungen und/oder zumindest eine der Verspannungsausnehmung bei einer pärchenweisen Anordnung der Transferstrukturen und/oder der Übertragungsstrukturen derart angeordnet sein, dass diese in Umfangrichtung zwischen den pärchenbildenden Übertragungsstrukturen und/oder Transferstrukturen angeordnet ist. Durch diese Anordnung der Verspannungsöffnung bzw. der Verspannungsausnehmung kann erreicht werden, dass bei einer Aufschirmung der Bremstrommel die resultierenden Belastungen auf die Spannmittel besonders gering sind. Zweckmäßigerweise sind der überwiegende Teil der Verspannungsöffnungen und/oder der Verspannungsausnehmungen, bevorzugt alle, zwischen pärchenbildenden Übertragungsstrukturen und/oder Transferstrukturen angeordnet.

Vorteilhafterweise verfügt die Reibsektion, insbesondere zumindest im Bereich nächstliegend zur Anschlusssektion, über eine Außenfläche, welche die Reibsektion in radialer Richtung nach außen begrenzt, wobei sich bevorzugt zumindest eine Übertragungsstruktur von der Außenfläche aus erstreckt. Die Außenfläche ist daher eine Fläche der Reibsektion, welche diese zumindest in einer Schnittebene, deren Normale parallel zur Rotationsachse ist, nach außen begrenzt. Durch das Erstrecken von der Außenfläche aus kann eine besonders kompakte Bremstrommel erreicht werden. In einer beispielhaften Ausführungsform ist die Übertragungsstruktur als eine Ausnehmung ausgebildet, wobei die Übertragungsstruktur sich dabei derart von der Außenfläche aus erstreckt, dass diese die Reibsektion möglichst vollständig durchdringt. In einer alternativen Ausführungsform ist die Übertragungsstruktur als eine Verzahnung ausgebildet, welche sich vorteilhafterweise in Richtung der Rotationsachse erstreckt, wobei die Übertragungsstruktur dabei die Außenfläche in Richtung der Rotationsachse verlängert. Der Vorteil dieser Ausführungsform liegt darin, dass eine solche einfach und kostengünstig bereits beim Urformen geschaffen werden kann.

In einer bevorzugten Ausführungsform verfügt die Anschlusssektion, insbesondere zumindest im Bereich nächstliegend zur Reibsektion, über eine Grenzfläche, welche die Anschlusssektion in radialer Richtung nach außen begrenzt, wobei die Grenzfläche und die Außenfläche eine gemeinsame Fläche bilden. Im Bereich nächstliegend zur Reibsektion ist eine Fläche unter anderem dann, wenn diese einen maximalen Abstand zur Reibsektion von maximal 20 mm aufweist. Die Grenzfläche begrenzt die Anschlusssektion dabei nach außen, bildet somit zumindest bereichsweise eine Fläche aus, welche die Anschlusssektion nach außen in radialer Richtung begrenzt. Bevorzugt weist die Grenzfläche hierzu eine Normale auf, welche im Wesentlichen parallel zur radialen Richtung ist. Durch das Ausbilden der Grenzfläche als eine gemeinsame Fläche mit der Außenfläche kann zum einen der aerodynamische Widerstand der Bremstrommel - durch eine Reduktion der Verwirbelung - reduziert werden, und zum anderen kann hierdurch auch die Verletzungsgefahr bei der Wartung der Bremstrommel reduziert werden. Gemeinsam sind Flächen insbesondere dann, wenn die beiden Flächen sich zwischen zwei idealen Konen erstrecken, die um dieselbe Rotationssymmetrieachse aufgespannt sind, welche insbesondere die Rotationsachse ist und wobei die Mantelflächen der beiden Konen jeweils einen konstanten Abstand von maximal 15 mm, bevorzugt von 10 mm und besonders bevorzugt von 5 mm zueinander aufweisen dürfen. Die beiden konzentrisch zueinander angeordneten Konen können alternativ als Zylinder ausgestaltet sein, so dass die Grenzflächen und die Außenflächen bevorzugt denselben konstanten Durchmesser zur Rotationsachse aufweisen.

Bevorzugt greifen die Transferstrukturen derart formschlüssig in die jeweils komplementären Übertragungsstrukturen, so dass eine Verlagerung zwischen der Reibsektion und der Anschlusssektion in Richtung der Rotationsachse und/oder in Umfangsrichtung verhindert ist. Durch diese Ausgestaltung der Transferstrukturen bzw. der Übertragungsstrukturen kann eine sichere Relativpositionierung der Anschlusssektion zur Reibsektion in Richtung der Rotationsachse und/oder in Umfangsrichtung zueinander sichergestellt werden. Beispielsweise kann dies dadurch erfolgen, dass die Reibsektion in die Anschlusssektion oder die Anschlusssektion in oder auf die Reibsektion gegossen wird. In anderen Worten können die Reibsektion und die Anschlusssektion somit bereits beim Urformprozess mit einander verbunden werden.

Zweckmäßigerweise erstrecken sich die Transferstrukturen in die radiale Richtung, wobei die Übertragungsstrukturen sich radial in Richtung der Rotationsachse erstrecken. In anderen Worten können die Transferstrukturen mit den Übertragungsstrukturen eine Art Verzahnung bilden, wobei die beiden ineinander greifenden Verzahnungspartner nicht parallel zueinander ausgerichtet sind bzw. angeordnet sind. Hierdurch resultiert eine besonders kompakte Bremstrommel, insbesondere in Richtung der Rotationsachse und/oder in Richtung der radialen Richtung.

Zweckmäßigerweise umfasst die Anschlusssektion eine Vielzahl von sekundären Transferstrukturen, welche sich insbesondere in die radiale Richtung erstrecken, wobei die Reibsektion eine Vielzahl von sekundären Übertragungsstrukturen umfasst, wobei die sekundären Transferstrukturen jeweils in eine komplementäre sekundäre Übertragungsstruktur greifen, so dass ein Drehmoment um die Rotationsachse und/oder eine Kraft in Richtung der positiven und/oder der negativen Rotationsachse formschlüssig zwischen den sekundären Transferstrukturen und den sekundären Übertragungsstrukturen übertragbar ist. Das sekundäre Übertragungspärchen, welches durch die komplementären sekundären Übertragungsstrukturen und sekundären Transferstrukturen gebildet ist, kann daher zu einer besonders sicheren Abstützung bzw. Lagerung der Reibsektion relativ zur Anschlusssektion verwendet werden. Bevorzugt ist das oder sind die sekundären Übertragungspärchen dabei derart ausgestaltet, dass diese(s) nicht zerstörungsfrei lösbar ist/sind, insbesondere kann dies dadurch erzielt werden, dass die sekundären Übertragungsstrukturen in die sekundären Transferstrukturen, oder umgekehrt, eingegossen sind. Besonders bevorzugt übertragen die sekundären Transferstrukturen durch das Eingreifen in die komplementären sekundären Übertragungsstrukturen zumindest in eine, zweckmäßigerweise diejenige wegweisend von der Reibsektion, bevorzugt in beide Richtungen entlang der Rotationsachse (+/-) die Kräfte zwischen der Reibsektion und der Anschlusssektion vollständig. In anderen Worten bedeutet dies, dass die sekundären Transferstrukturen in Zusammenspiel mit den komplementären sekundären Übertragungsstrukturen vollständig für das Verhindern der relativen Verlagerbarkeit der Reibsektion zur Anschlusssektion in Richtung der Rotationsachse verantwortlich sein können. Hierdurch können die Transferstrukturen bzw. Übertragungsstrukturen optimal an die Übertragung von Drehmomenten angepasst werden, da diese keine Kräfte in Richtung der Rotationsachse von der Reibsektion auf die Anschlusssektion - bei dieser Art der Ausgestaltung - übertragen müssen. Insbesondere kann durch den Einsatz der sekundären Transferstrukturen und der sekundären Übertragungsstrukturen auf den Einsatz von Verspannungsöffnungen und der damit einhergehenden Schwächung verzichtet werden. Bevorzugt liegen die sekundären Transferstrukturen auf derselben Höhe in Richtung der Rotationsachse wie die Transferstrukturen. Hierdurch kann erreicht werden, dass durch die thermisch induzierte Verformung eine Verspannung der sekundären Transferstrukturen bzw. der sekundären Übertragungsstrukturen durch die Transferstrukturen bzw. Übertragungsstrukturen durch die geometrische Anordnung derselbigen minimiert bzw. verhindert wird. Zweckmäßigerweise weist die Bremstrommel zumindest vier, bevorzugt zumindest sechs und besonders bevorzugt zumindest acht, dieser sekundären Übertragungspärchen auf.

In einer bevorzugten Ausführungsform umfasst und/oder umgibt, bevorzugt vollständig, zumindest eine Übertragungsstruktur, bevorzugt alle, jeweils zumindest eine sekundäre Übertragungsstruktur. Durch diese Anordnung der sekundären Übertragungsstruktur relativ zur Übertragungsstruktur resultiert eine besonders kompakte Reibsektion der Bremstrommel. Beispielsweise kann dies dadurch erreicht werden, dass die Übertragungsstruktur als eine Verzahnung oder als ein Vorsprung in Richtung der Rotationsachse ausgebildet ist und die sekundäre Übertragungsstruktur als eine Ausnehmung, welche sich im Wesentlichen parallel zur radialen Richtung erstreckt. Durch diese Art der Ausgestaltung der Reibsektion können die Übertragungsstrukturen und die sekundären Übertragungsstrukturen dahingehend thermisch voneinander entkoppelt werden, dass eine thermisch bedingte Ausdehnung der Reibsektion, insbesondere in Richtung der Rotationsachse, nur geringe mechanische Belastung im Bereich der Übertragungsstrukturen und/oder der sekundären Übertragungsstrukturen verursacht.

Bevorzugt liegt das Verhältnis zwischen der Erstreckung der Anschlusssektion in Richtung der Rotationsachse zur Erstreckung der Reibsektion in Richtung der Rotationsachse in einem Bereich von 0,05 bis 0,4, bevorzugt in einem Bereich von 0,1 bis 0,3 und besonders bevorzugt in einem Bereich von 0,15 bis 0,25. Die Erstreckung der Anschlusssektion in Richtung der Rotationsachse ist insbesondere die maximale Erstreckung der Anschlusssektion in Richtung der Rotationsachse, wobei bevorzugt die Transferstrukturen bei der Bestimmung der Erstreckung nicht mit berücksichtigt werden. Auch die maßgebliche Erstreckung der Reibsektion in Richtung der Rotationsachse ist durch die maximale Erstreckung derselbigen in Richtung der Rotationsachse gebiltet. Bei einem Verhältnis der Erstreckung der Anschlusssektion in Richtung der Rotationsachse zur Erstreckung der Reibsektion in Richtung der Rotationsachse von 0,05 bis 0,4 kann eine besonders mechanisch belastbare Anschlusssektion und somit eine besonders sichere Drehmomentübertragung zwischen Reibsektion und Anschlusssektion um die Rotationsachse erreicht werden. Bei einem Verhältnis von 0,1 bis 0,3 hat die Anmelderin herausgefunden, dass aufgrund der relativen modalen Massen der Reibsektion zur Anschlusssektion eine besonders geringe Neigung zu Schwingungen, insbesondere im hörbaren Bereich, der Bremstrommel erreicht werden kann. Um eine kompakte Bauweise der Bremstrommel zu erreichen, liegt das Erstreckungsverhältnis in Richtung der Rotationsachse bevorzugt in einem Bereich von 0,15 bis 0,25.

Zweckmäßigerweise liegt das Verhältnis zwischen dem Innendurchmesser der Anschlusssektion zum Innendurchmesser der Reibfläche in einem Bereich von 0,5 bis 1,1, bevorzugt in einem Bereich von 0,6 bis 0,95 und besonders bevorzugt in einem Bereich von 0,75 bis 0,9. Der maßgebliche Innendurchmesser der Anschlusssektion ist der minimalst mögliche Innendurchmesser der Anschlusssektion um die Rotationsachse. Der maßgebliche Innendurchmesser der Reibfläche ist der mittlere Durchmesser oder der kleinstmögliche Durchmesser der Reibfläche relativ zur bzw. um die Rotationsachse. Bei einem Verhältnis der Innendurchmesser in einem Bereich von 0,5 bis 1,1 kann eine besonders mechanische belastbare Anschlusssektion erreicht werden. Bei einem Verhältnis der Innendurchmesser im Bereich von 0,6 bis 0,95 hat die Anmelderin herausgefunden, dass eine besonders geringe Neigung zur Rissbildung der Anschlusssektion resultiert. Bei einem Verhältnis im Bereich von 0,7 bis 0,9 resultiert eine besonders kompakte Bremstrommel, so dass Bauraum gespart werden kann.

Bevorzugt weist die Reibsektion zumindest eine Kontaktfläche auf, wobei die Normale der Kontaktfläche eine Komponente in Richtung der radialen Richtung aufweist, wobei die Anschlusssektion eine Berührungsfläche aufweist, wobei die Normale der Berührungsfläche im Wesentlichen parallel zur Normalen der Kontaktfläche ist, wobei die Kontaktfläche und die Berührungsfläche in einem ersten Betriebszustand kontaktieren, insbesondere unmittelbar, und wobei die Kontaktfläche und die Berührungsfläche in einem zweiten Betriebszustand, insbesondere in Richtung der radialen Richtung, beabstandet zueinander sind, wobei die Temperatur der Bremstrommel im ersten Betriebszustand kleiner ist als im zweiten Betriebszustand. Die Kontaktfläche und die Berührungsfläche können durch beliebige Flächen der Reibsektion bzw. der Anschlusssektion gebildet sein, wobei diese im ersten Betriebszustand dazu ausgelegt sind, miteinander zu kontaktieren oder kontaktieren zu können. Die Normalen der beiden Flächen weisen zumindest eine Komponente in Richtung der radialen Richtung auf und sind dabei im Wesentlichen parallel zueinander orientiert, wobei in diesem Zusammenhang "im Wesentlichen parallel zueinander" bedeutet, dass die nach außen weisende Normale der Kontaktfläche im Wesentlichen parallel zur nach innen weisenden Normalen der Berührungsfläche orientiert ist (Richtungsunabhängigkeit der Normalen +/-). Der erste Betriebszustand ist dadurch charakterisiert, dass sich die Bremstrommel in einem abgekühlten Zustand befindet. Insbesondere weist die Bremstrommel im ersten Betriebszustand Umgebungstemperatur auf. Die Temperatur der Bremstrommel bestimmt sich dabei durch die gemittelte, insbesondere massengemittelte, Temperatur der Reibsektion und der Anschlusssektion. Der zweite Betriebszustand ist insbesondere dadurch charakterisiert, dass die Temperatur der Bremstrommel im Vergleich zum ersten Betriebszustand durch eine Bremsung erhöht ist. Insbesondere kann die Temperatur des ersten Betriebszustandes dabei bevorzugt zumindest 20 Kelvin, besonders bevorzugt zumindest 100 Kelvin und besonders bevorzugt zumindest 150 Kelvin höher sein als die Temperatur im ersten Betriebszustand. Durch diese Art der Ausgestaltung der Bremstrommel kann erreicht werden, dass die Auswirkung der Schirmung auf die mechanische Belastung der Komponenten der Bremstrommel reduziert wird.

Vorteilhafterweise besteht die Anschlusssektion zum überwiegenden Teil aus einem anderen Material als die Reibsektion. Hierdurch kann erreicht werden, dass die Anschlusssektion und/oder die Reibsektion aus Materialien bestehen, welche optimal an die zu erfüllenden Aufgaben angepasst werden können. Beispielhaft kann die Anschlusssektion aus einem Grauguss wie EN-GJS-500-7 oder aus einer Aluminiumlegierung gebildet sein, wobei die Reibsektion insbesondere aus einem eisenhaltigen Metall, wie beispielsweise EN-GJL-250 oder generell aus einem Grauguss gefertigt sein kann. Bei der Verwendung von EN-GJS-500-7 in der Anschlusssektion kann eine besonders mechanisch belastbare Anschlusssektion erreicht werden. Die Verwendung von EN-GJL-250 zur Ausbildung der Reibsektion hat den Vorteil, dass durch diese Materialwahl eine besonders hohe Materialdämpfung erzielt werden kann, sodass eine besonders "leise" Bremstrommel resultiert. Durch diese Materialwahl ist die Anschlusssektion dahingehend optimiert, ein besonders geringes Gewicht aufzuweisen und die Reibsektion dahingehend, eine besonders geringe Neigung zu Verschleiß aufzuweisen. Alternativ bevorzugt können die Anschlusssektion und die Reibsektion auch aus demselben Material hergestellt sein, um Kosten zu sparen.

Weitere Vorteile und Merkmale der vorliegenden Erfindung ergeben sich aus der nachfolgenden Beschreibung mit Bezug auf die Figuren. Einzelne Merkmale der dargestellten Ausführungsform können dabei auch in anderen Ausführungsformen eingesetzt werden, sofern dies nicht ausdrücklich ausgeschlossen wurde.

Es zeigen:
Fig. 1 eine schematische perspektivische Ansicht einer erfindungsgemäßen Bremstrommel;
Fig. 2 eine perspektivische Ansicht einer erfindungsgemäßen Anschlusssektion;
Fig. 3 einen Schnitt durch eine erfindungsgemäße Bremstrommel;
Fig. 4 eine weitere perspektivische Ansicht einer erfindungsgemäßen Bremstrommel;
Fig. 5 einen Ausschnitt aus einer erfindungsgemäßen Bremstrommel;
Fig.6 verschiedene Ausführungsformen von Übertragungs- und Transferstrukturen.

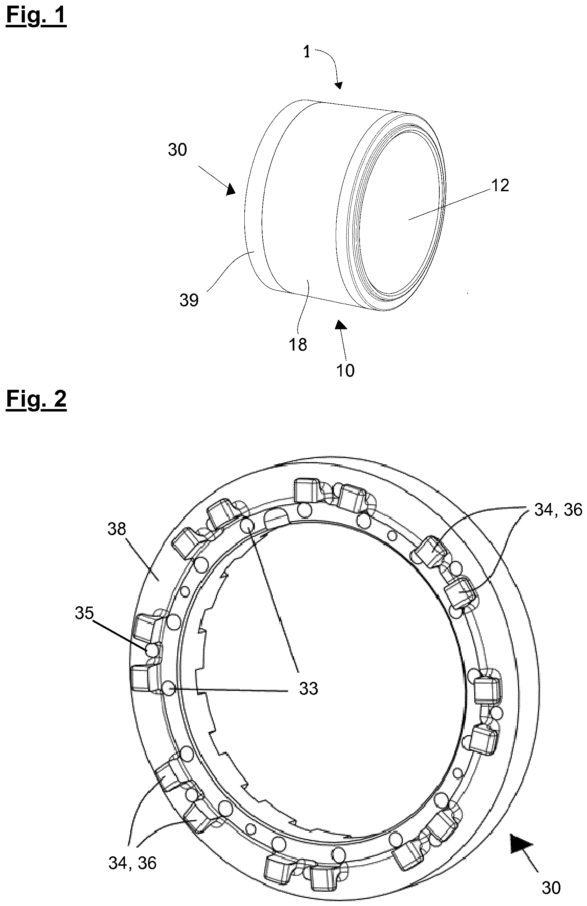

In der **Figur 1** ist eine erfindungsgemäße Bremstrommel 1 zu erkennen, welche über eine Reibsektion 10 und eine Anschlusssektion 30 verfügt. Radial nach außen ist die Anschlusssektion 30 durch die Grenzfläche 39 begrenzt und die Reibsektion 10 durch die Außenfläche 18. Zur Rotationsachse A (in der Figur 1 nicht gekennzeichnet) hin ist die Reibsektion 10 zumindest bereichsweise durch die Reibfläche 12 begrenzt.

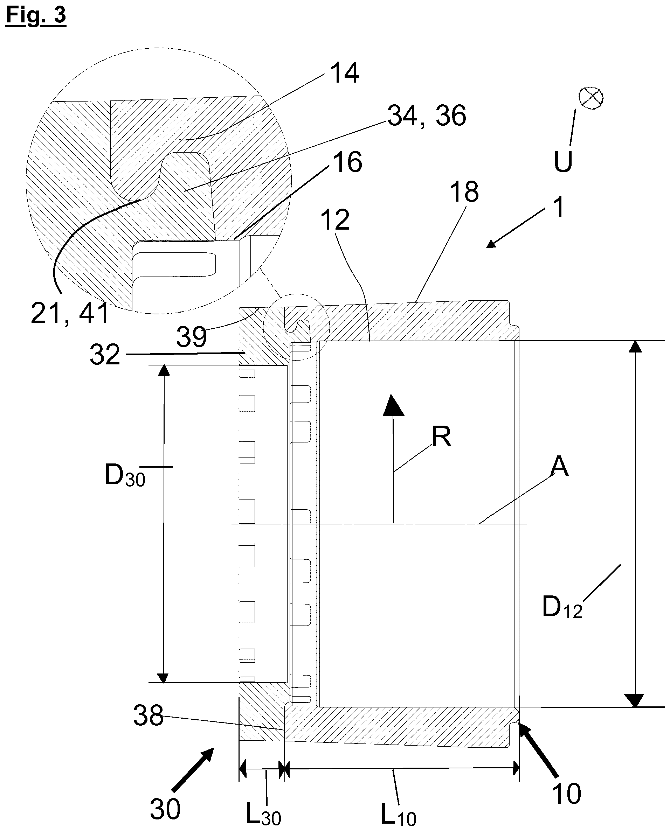

In der **Figur 2** ist eine erfindungsgemäße Anschlusssektion 30 gezeigt, welche beispielsweise in der Figur 1 und/oder in der Figur 3 dargestellten Ausführungsform der Bremstrommel 1 Anwendung finden kann. Die Anschlusssektion 30 verfügt in der dargestellten Ausführungsform über eine Anschlagsfläche 38, an weleher eine nicht dargestellte Reibsektion 10, insbesondere unmittelbar kontaktierend, zur Anlage gebracht werden kann. Von der Anschlagsfläche 38 erstrecken sich in Richtung der Rotationsachse A (in der Figur 2 nicht gekennzeichnet) Verspannungsöffnungen 35 und Transferstrukturen 34. Die Verspannungsöffnungen 35 sind dazu ausgelegt, nicht dargestellte Spannmittel aufzunehmen. Die Transferstrukturen 34 sind in der dargestellten Ausführungsform paarweise in Umfangsrichtung U angeordnet, wobei jeweils zwischen den beiden pärchenbildenden Transferstrukturen 34 eine Verspannungsöffnung 35 angeordnet ist. Die Transferstrukturen 34 weisen an dem der Anschlagsfläche 38 gegenüberliegenden Ende jeweils einen Verzahnungsbereich 36 auf, welcher dazu ausgelegt ist, das Drehmoment um die Rotationsachse A, insbesondere zum überwiegenden Teil, auf die Übertragungsstrukturen 14 der Reibsektion 10 zu übertragen.

In der **Figur 3** ist eine Schnittansicht durch eine erfindungsgemäße Ausführungsform einer Bremstrommel 1 gezeigt, wobei die Ausgestaltung der Übertragungsstrukturen 14 und der Transferstrukturen 34 noch einmal klarstellend in der obigen Detailansicht abgebildet sind. Die Anschlusssektion 30 erstreckt sich in Richtung der Rotationsachse A über die Länge L₃₀ und die Reibsektion 10 über die Länge L₁₀. Die Anschlusssektion 30 verfügt über eine Anschlagsfläche 38, welche unmittelbar mit einer korrespondierenden Fläche der Reibsektion 10 kontaktiert. Die Anschlusssektion 30 weist einen Innendurchmesser D₃₀ auf, durch den sich insbesondere eine nicht dargestellte Achse oder Welle erstrecken kann. Die Montagefläche 32 begrenzt die Anschlusssektion 30 in Richtung der Rotationsachse A gegenüberliegend zur Reibsektion 10. Die Anschlusssektion 30 verfügt über eine Grenzfläche 39, welche die Anschlusssektion 30 in Richtung der radialen Richtung R nach außen begrenzt und die Reibsektion 10 verfügt über eine Außenfläche 18, welche die selbige ebenfalls in Richtung der radialen Richtung R begrenzt, wobei die Grenzfläche 39 und die Außenfläche 18 als eine gemeinsame Fläche ausgebildet sind. In radialer Richtung R nach innen wird die Reibsektion 10 zum überwiegenden Teil durch die Reibfläche 12 begrenzt, welche einen Innendurchmesser D₁₂ aufweist. Zusätzlich wird die Reibsektion 10 nach radial innen auch durch die Innenfläche 16 begrenzt, von welcher sich die Übertragungsstruktur 14 in Form einer Ausnehmung in Richtung der radialen Richtung R erstreckt. Die Übertragungsstruktur 14 greift dabei in die komplementäre Transferstruktur 34 ein, welche sich in Richtung der Rotationsachse A von der Anschlagsfläche 38 aus erstreckt und einen Verzahnungsbereich 36 aufweist, welcher sich in Richtung der radialen Richtung R erstreckt. Aus der hier dargestellten Schnittzeichnung nicht ersichtlich - weisen die Reibsektion 10 und die Anschlusssektion 30 in Umfangsrichtung U jeweils eine Vielzahl von Übertragungsstrukturen 14 und Transferstrukturen 34 auf.

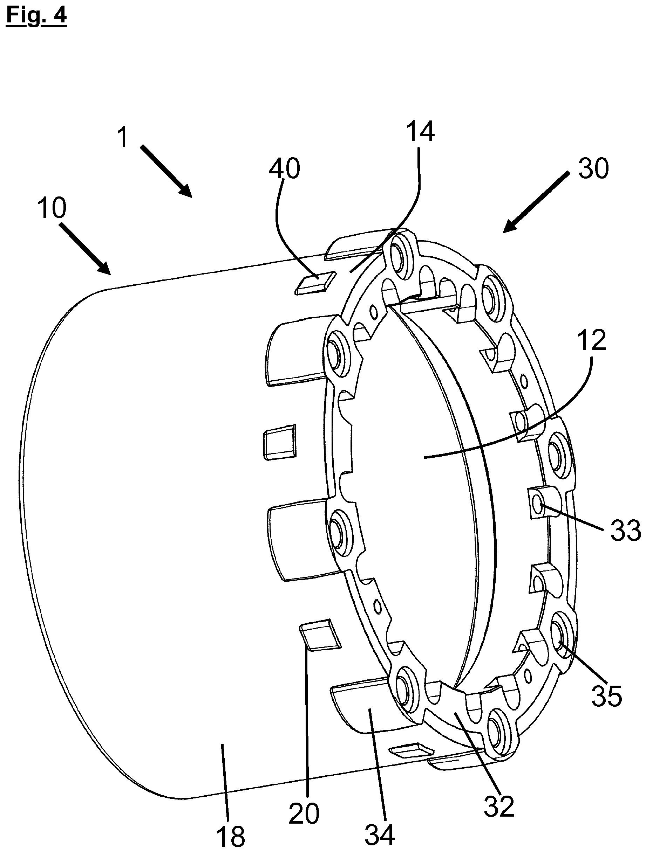

In der **Figur 4** ist eine weitere erfindungsgemäße Ausführungsform einer Bremstrommel 1 dargestellt, wobei die Reibsektion 10 neben den Übertragungsstrukturen 14, welche als eine Verzahnung in Richtung der Rotationsachse A ausgebildet sind, noch über sekundäre Übertragungsstrukturen 20 verfügt, welche als eine im Wesentlichen parallelogramme Ausnehmung ausgeführt sind. Die Anschlusssektion 30 verfügt über jeweils komplementäre Transferstrukturen 34, welche als radial nach außen weisende Verzahnungen ausgebildet sind. Die Transferstrukturen 34 weisen dabei - in der dargestellten Ausführungsform - jeweils eine Verspannungsöffnung 35 auf. Die sekundären Transferstrukturen 40 sind als Vorsprünge in Richtung der radialen Richtung R ausgebildet, wobei diese einen im Wesentlichen parallelogrammen Querschnitt aufweisen und in die sekundären Übertragungsstrukturen 20 greifen. Zur Festlegung an einer nicht dargestellten Nabe verfügt die Anschlusssektion 30 über eine Montagefläche 32 und Montageöffnungen 33.

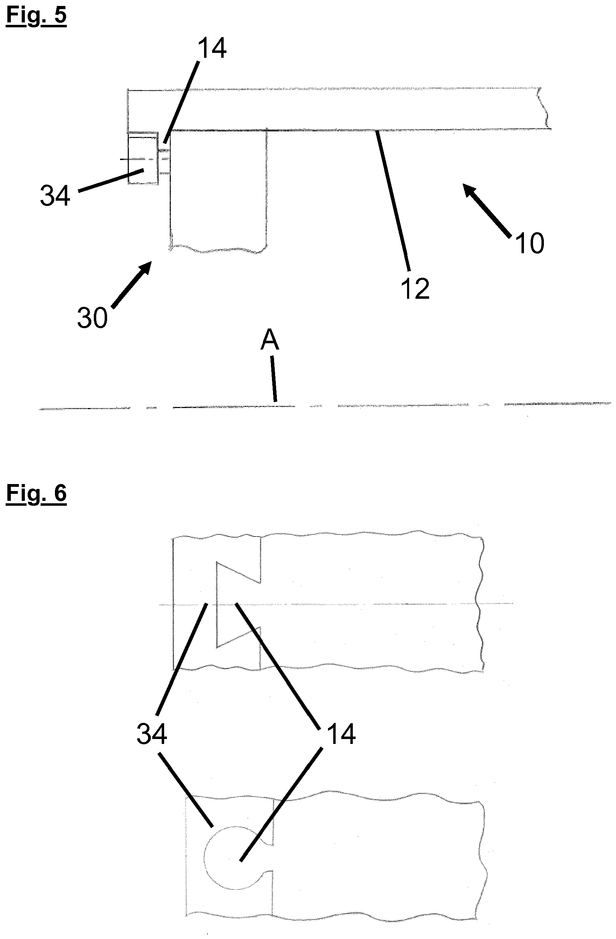

Die **Figur 5** zeigt einen Ausschnitt einer erfindungsgemäßen Bremstrommel 1. In der dargestellten Ausführungsform ist einstückig an der Reibsektion 10 eine Übertragungsstruktur 14 ausgebildet, in die eine komplementär ausgebildete Transferstruktur 34 eingreift. Diese Transferstruktur 34 ist dabei als eine Passschraube ausgebildet, welche form- und kraftschlüssig die Reibsektion 10 mit der Anschlusssektion 30 verbindet. In der dargestellten Ausführungsform ist die Reibfläche 12 der Reibsektion 10 vollständig an der Anschlusssektion 30 in Richtung der Rotationsachse A vorbeiführbar. Hierdurch kann insbesondere eine spätere Austauschbarkeit der Reibsektion 10 erreicht werden, ohne dass die Anschlusssektion 30 demontiert werden muss.

In der **Figur 6** sind Ausführungsformen von verschiedenen Übertragungsstrukturen 14 und komplementär ausgebildeten Transferstrukturen 34 gezeigt, wobei die eine Ausführungsform der Übertragungsstruktur 14 bzw. die komplementär ausgebildete Transferstruktur 34 einen im Wesentlichen kreisrunden Querschnitt aufweist und die andere Ausführungsform der Übertragungsstruktur 14 bzw. der komplementär ausgebildeten Transferstruktur 34 einen v-förmigen Querschnitt aufweist.

### Bezugszeichenliste:

- 1: - Bremstrommel
- 10: - Reibsektion
- 12: - Reibfläche
- 14: - Übertragungsstruktur
- 16: - Innenfläche
- 18: - Außenfläche
- 20: - sekundäre Übertragungsstruktur
- 21: - Kontaktfläche
- 30: - Anschlusssektion
- 32: - Montagefläche
- 33: - Montageöffnung
- 34: - Transferstruktur
- 35: - Verspannungsöffnung
- 36: - Verzahnungsbereich
- 38: - Anschlagsfläche
- 39: - Grenzfläche
- 40: - sekundäre Transferstruktur
- 41: - Berührungsfläche
- A: - Rotationsachse
- D₁₂: - Innendurchmesser der Reibfläche
- D₃₀: - Innendurchmesser der Anschlusssektion
- L₁₀: - Erstreckung der Reibsektion in Richtung der Rotationsachse
- L₃₀: - Erstreckung der Anschlusssektion in Richtung der Rotationsachse
- R: - Radiale Richtung

## Patentansprüche

1. Bremstrommel (1), insbesondere für Nutzfahrzeuge,
wobei die Bremstrommel (1) drehbar um eine Rotationsachse (A) gelagert ist oder dazu ausgelegt ist, drehbar um eine Rotationsachse (A) gelagert zu werden,
wobei die Bremstrommel (1) eine Reibsektion (10) und eine Anschlusssektion (30) umfasst,
wobei die Reibsektion (10) eine Reibfläche (12) und eine Vielzahl von Übertragungsstrukturen (14) umfasst,
wobei die Anschlusssektion (30) zumindest eine Montagefläche (32) und eine Vielzahl von Transferstrukturen (34) umfasst,
wobei die Transferstrukturen (34) formschlüssig und/oder kraftschlüssig in die jeweils komplementären Übertragungsstrukturen (14) greifen, so dass ein Drehmoment um die Rotationsachse (A) formschlüssig übertragbar ist, und wobei die Montagefläche (32) dazu dient, die Bremstrommel (1) mittelbar oder unmittelbar an einer Nabe festzulegen,
**dadurch gekennzeichnet, dass** die Transferstrukturen (34) sich von einer Anschlagsfläche (38) aus erstrecken, insbesondere in Richtung der Rotationsachse (A).

2. Bremstrommel (1) gemäß Anspruch 1,
wobei zumindest eine Übertragungsstruktur (14) relativ zu der jeweils komplementären Transferstruktur (34) in eine radiale Richtung (R) verlagerbar ist, insbesondere in die positive radiale Richtung (R).

3. Bremstrommel (1) gemäß einem der vorhergehenden Ansprüche,
wobei die Transferstrukturen (34) je zumindest einen Verzahnungsbereich (36) aufweisen, welcher sich in eine radiale Richtung (R) erstreckt,
und wobei die Verzahnungsbereiche (36) dazu ausgelegt sind, das Drehmoment um die Rotationsachse (A) auf die komplementäre Übertragungsstruktur (14) zu übertragen.

4. Bremstrommel (1) gemäß einem der vorhergehenden Ansprüche,
wobei zumindest eine Transferstruktur (34), insbesondere in einem Verzahnungsbereich (36), einen im Wesentlichen parallelogrammen Querschnitt aufweist.

5. Bremstrommel (1) gemäß einem der vorhergehenden Ansprüche,
wobei zumindest eine Übertragungsstruktur (14), bevorzugt alle Übertragungsstrukturen (14), durch eine Ausnehmung oder durch einen Vorsprung gebildet ist, welche/r sich in Richtung der radialen Richtung (R) erstreckt.

6. Bremstrommel (1) gemäß Anspruch 5,
wobei zumindest eine Übertragungsstruktur (14) sich von einer Innenfläche (16) aus erstreckt, wobei die Innenfläche (16) die Reibsektion (10) zumindest bereichsweise zur Rotationsachse (A) hin begrenzt.

7. Bremstrommel (1) gemäß einem der vorhergehenden Ansprüche,
wobei die Übertragungsstrukturen (14) und/oder die Transferstruktur (34) in eine Umfangsrichtung (U) paarweise angeordnet sind.

8. Bremstrommel (1) gemäß einem der vorhergehenden Ansprüche,
wobei die Reibsektion (10), insbesondere zumindest im Bereich nächstliegend zur Anschlusssektion (30), über eine Außenfläche (18) verfügt, welche die Reibsektion (10) in radialer Richtung (R) nach außen begrenzt, wobei sich bevorzugt zumindest eine Übertragungsstruktur (14) von der Außenfläche (18) aus erstreckt.

9. Bremstrommel (1) gemäß einem der vorhergehenden Ansprüche,
wobei die Transferstrukturen (34) derart formschlüssig in die jeweils komplementären Übertragungsstrukturen (14) greifen, so dass eine Verlagerung zwischen der Reibsektion (10) und der Anschlusssektion (30) in Richtung der Rotationsachse (A) und/ oder in die Umfangsrichtung (U) verhindert ist.

10. Bremstrommel (1) gemäß einem der vorhergehenden Ansprüche,
wobei die Transferstrukturen (34) sich in die radiale Richtung (R) erstrecken, wobei die Übertragungsstrukturen (14) sich in Richtung der Rotationsachse (A) erstrecken.

11. Bremstrommel (1) gemäß einem der vorhergehenden Ansprüche,
wobei die Anschlusssektion (30) eine Vielzahl von sekundären Transferstrukturen (40) umfasst,
welche sich insbesondere in die radiale Richtung (R) erstrecken,
wobei die Reibsektion (10) eine Vielzahl von sekundären Übertragungsstrukturen (20) umfasst,
wobei die sekundären Transferstrukturen (40) jeweils in eine komplementäre sekundäre Übertragungsstruktur (20) greifen,
so dass ein Drehmoment um die Rotationsachse (A) und/oder
eine Kraft in Richtung der positiven und/oder der negative Rotationsachse (A) formschlüssig zwischen den sekundären Transferstrukturen (40) und den sekundären Übertragungsstrukturen (20) übertragbar ist.

12. Bremstrommel (1), gemäß Anspruch 11,
wobei zumindest eine Übertragungsstruktur (14), bevorzugt alle, jeweils zumindest eine sekundäre Übertragungsstruktur (20) umfasst und/oder, bevorzugt vollständig, umgibt.

13. Bremstrommel (1) gemäß einem der vorhergehenden Ansprüche,
wobei das Verhältnis zwischen dem Innendurchmesser (D₃₀) der Anschlusssektion (30) zum Innendurchmesser (D₁₂) der Reibfläche (12) in einem Bereich von 0,5 bis 1,1, bevorzugt in einem Bereich von 0,6 bis 0,95 und besonders bevorzugt in einem Bereich von 0,75 bis 0,9 liegt.

14. Bremstrommel (1) gemäß einem der vorhergehenden Ansprüche,
wobei die Reibsektion (10) zumindest eine Kontaktfläche (21) aufweist,
wobei die Normale der Kontaktfläche (21) eine Komponente in Richtung der radialen Richtung (R) aufweist,
wobei die Anschlusssektion (30) eine Berührungsfläche (41) aufweist, wobei die Normale der Berührungsfläche (41) im Wesentlichen parallel zur Normalen der Kontaktfläche (21) ist,
wobei die Kontaktfläche (21) und die Berührungsfläche (41) in einem ersten Betriebszustand kontaktieren, insbesondere unmittelbar, und
wobei die Kontaktfläche (21) und die Berührungsfläche in einem zweiten Betriebszustand, insbesondere in Richtung der radialen Richtung (R), beabstandet zu einander sind,
wobei die Temperatur der Bremstrommel (1) im ersten Betriebszustand kleiner ist als im zweiten Betriebszustand.

## Claims

1. A brake drum (1), in particular for utility vehicles,
wherein the brake drum (1) is mounted or adapted to be mounted rotatably about an axis of rotation (A),
wherein the brake drum (1) comprises a friction section (10) and a connection section (30),
wherein the friction section (10) comprises a friction surface (12) and a plurality of transmission structures (14),
wherein the connection section (30) comprises at least one mounting surface (32) and a plurality of transfer structures (34),
wherein the transfer structures (34) engage positively and/or nonpositively in the respective complementary transmission structures (14) so that a torque about the axis of rotation (A) can be transmitted positively, and
wherein the mounting surface (32) serves to fix the brake drum (1) indirectly or directly to a hub,
**characterised by** the transfer structures (34) extend from a stop surface (38), in particular in the direction of the axis of rotation (A).

2. The brake drum (1) according to claim 1,
wherein at least one transmission structure (14) is displaceable relative to the respective complementary transfer structure (34) in a radial direction (R), in particular in the positive radial direction (R).

3. The brake drum (1) according to any one of the preceding claims,
wherein the transfer structures (34) each have at least one gearing area (36) which extends in a radial direction (R),
and wherein the gearing areas (36) are adapted to transmit the torque about the axis of rotation (A) to the complementary transmission structure (14).

4. The brake drum (1) according to any one of the preceding claims,
wherein at least one transfer structure (34), in particular in a gearing area (36), has a substantially parallelogram cross-section.

5. The brake drum (1) according to any one of the preceding claims,
wherein at least one transmission structure (14), preferably all transmission structures (14), is formed by a recess or by a projection which extends in the direction of the radial direction (R).

6. The brake drum (1) according to claim 5,
wherein at least one transmission structure (14) extends from an inner surface (16), the inner surface (16) limiting the friction section (10) at least in regions towards the axis of rotation (A).

7. The brake drum (1) according to any one of the preceding claims,
wherein the transmission structures (14) and/or the transfer structure (34) are arranged in pairs in a circumferential direction (U)

8. The brake drum (1) according to any one of the preceding claims,
wherein the friction section (10), in particular at least in the area closest to the connection section (30), has an outer surface (18) which outwardly delimits the friction section (10) in the radial direction (R),
wherein preferably at least one transmission structure (14) extends from the outer surface (18).

9. The brake drum (1) according to any one of the preceding claims,
wherein the transfer structures (34) engage positively in the respective complementary transmission structures (14) in such a way that a displacement between the friction section (10) and the connection section (30) in the direction of the axis of rotation (A) and/ or in the circumferential direction (U) is prevented.

10. The brake drum (1) according to any one of the preceding claims,
wherein the transfer structures (34) extend in the radial direction (R) wherein the transmission structures (14) extend in the direction of the axis of rotation (A).

11. The brake drum (1) according to any one of the preceding claims,
wherein the connection section (30) comprises a plurality of secondary transfer structures (40),
which extend in particular in the radial direction (R),
wherein the friction section (10) comprises a plurality of secondary transmission structures (20),
wherein the secondary transfer structures (40) each engage a complementary secondary transmission structure (20),
so that a torque about the axis of rotation (A) and/or
a force in the direction of the positive and/or the negative axis of rotation (A) can be transmitted in a positive manner between the secondary transfer structures (40) and the secondary transmission structures (20).

12. The brake drum (1), according to claim 11,
wherein at least one transmission structure (14), preferably all of them, each comprises and/or surrounds, preferably completely, at least one secondary transmission structure (20).

13. The brake drum (1) according to any one of the preceding claims,
wherein the ratio between the inner diameter (D₃₀) of the connection section (30) and the inner diameter (D₁₂) of the friction surface (12) is in a range from 0.5 to 1.1, preferably in a range from 0.6 to 0.95 and more preferably in a range from 0.75 to 0.9.

14. The brake drum (1) according to any one of the preceding claims,
wherein the friction section (10) has at least one contact surface (21),
wherein the normal of the contact surface (21) has a component in the direction of the radial direction (R),
wherein the connection section (30) has an interfacing surface (41),
wherein the normal of the interfacing surface (41) is substantially parallel to the normal of the contact surface (21),
wherein the contact surface (21) and the interfacing surface (41) make contact in a first operating state, in particular directly, and
wherein the contact surface (21) and the interfacing surface are spaced apart from each other in a second operating state, in particular in the direction of the radial direction (R),
wherein the temperature of the brake drum (1) is smaller in the first operating state than in the second operating state.

## Revendications

1. Tambour de frein (1), en particulier pour véhicules utilitaires,
dans lequel
le tambour de frein (1) est monté de façon mobile en rotation autour d'un axe de rotation (A) ou est conçu pour être monté de façon mobile en rotation autour d'un axe de rotation (A),
le tambour de frein (1) comprend une section de friction (10) et une section de raccordement (30),
la section de friction (10) comprend une surface de friction (12) et une multitude de structures de transmission (14),
la section de raccordement (30) comprend au moins une surface de montage (32) et une multitude de structures de transfert (34),
les structures de transfert (34) s'engagent par coopération de forme et/ou par coopération de force dans les structures de transmission complémentaires respectives (14), de sorte qu'un couple de rotation peut être transmis par coopération de forme autour de l'axe de rotation (A), et
la surface de montage (32) sert à fixer le tambour de frein (1) indirectement ou directement sur un moyeu,
**caractérisé en ce que**
les structures de transfert (34) s'étendent à partir d'une surface de butée (38), en particulier en direction de l'axe de rotation (A).

2. Tambour de frein (1) selon la revendication 1,
dans lequel
au moins une structure de transmission (14) est déplaçable par rapport à la structure de transfert complémentaire respective (34) dans une direction radiale (R), en particulier dans la direction radiale positive (R).

3. Tambour de frein (1) selon l'une des revendications précédentes,
dans lequel
les structures de transfert (34) comprennent chacune au moins une zone dentée (36) s'étendant dans une direction radiale (R), et
les zones dentées (36) sont conçues pour transmettre le couple de rotation autour de l'axe de rotation (A) à la structure de transmission complémentaire (14).

4. Tambour de frein (1) selon l'une des revendications précédentes,
dans lequel
au moins une structure de transfert (34), en particulier dans une zone dentée (36), présente une section transversale sensiblement en forme de parallélogramme.

5. Tambour de frein (1) selon l'une des revendications précédentes,
dans lequel
au moins une structure de transmission (14), de préférence toutes les structures de transmission (14), est/sont formée(s) par un évidement ou par une saillie s'étendant dans le sens de la direction radiale (R).

6. Tambour de frein (1) selon la revendication 5,
dans lequel
au moins une structure de transmission (14) s'étend à partir d'une surface intérieure (16), ladite surface intérieure (16) délimitant ladite section de friction (10) au moins localement vers l'axe de rotation (A).

7. Tambour de frein (1) selon l'une des revendications précédentes,
dans lequel
les structures de transmission (14) et/ou la structure de transfert (34) sont disposées par paires dans une direction circonférentielle (U).

8. Tambour de frein (1) selon l'une des revendications précédentes,
dans lequel
la section de friction (10), en particulier au moins dans la zone la plus proche de la section de raccordement (30), présente une surface extérieure (18) qui délimite la section de friction (10) vers l'extérieur dans la direction radiale (R), et
de préférence, au moins une structure de transmission (14) s'étend à partir de la surface extérieure (18).

9. Tambour de frein (1) selon l'une des revendications précédentes,
dans lequel
les structures de transfert (34) s'engagent par coopération de forme dans les structures de transmission complémentaires respectives (14) de telle sorte qu'un déplacement entre la section de friction (10) et la section de raccordement (30) dans la direction de l'axe de rotation (A) et/ou dans la direction circonférentielle (U) est empêché.

10. Tambour de frein (1) selon l'une des revendications précédentes,
dans lequel
les structures de transfert (34) s'étendent dans la direction radiale (R), et les structures de transmission (14) s'étendent dans la direction de l'axe de rotation (A).

11. Tambour de frein (1) selon l'une des revendications précédentes,
dans lequel
la section de raccordement (30) comprend une multitude de structures de transfert secondaires (40) qui s'étendent en particulier dans la direction radiale (R),
la section de friction (10) comprend une multitude de structures de transmission secondaires (20),
les structures de transfert secondaires (40) s'engagent chacune dans une structure de transmission secondaire complémentaire (20),
de telle sorte qu'un couple de rotation autour de l'axe de rotation (A) et/ou une force dans la direction de l'axe de rotation positif et/ou négatif (A) peut être transmis(e) par coopération de forme entre les structures de transfert secondaires (40) et les structures de transmission secondaires (20).

12. Tambour de frein (1) selon la revendication 11,
dans lequel
au moins une structure de transmission (14), de préférence toutes, présente(nt) et/ou entoure(nt) de préférence complètement au moins une structure de transmission secondaire (20).

13. Tambour de frein (1) selon l'une des revendications précédentes,
dans lequel le rapport entre le diamètre intérieur (D₃₀) de la section de raccordement (30) et le diamètre intérieur (D₁₂) de la surface de friction (12) est dans une plage de 0,5 à 1,1, de préférence dans une plage de 0,6 à 0,95 et de manière particulièrement préférée dans une plage de 0,75 à 0,9.

14. Tambour de frein (1) selon l'une des revendications précédentes,
dans lequel
la section de friction (10) comprend au moins une surface de contact (21), la normale à la surface de contact (21) présente une composante dans le sens de la direction radiale (R),
la section de raccordement (30) présente une surface d'appui (41),
la normale à la surface d'appui (41) est sensiblement parallèle à la normale à la surface de contact (21),
la surface de contact (21) et la surface d'appui (41) sont en contact, en particulier directement, dans un premier état de fonctionnement et
la surface de contact (21) et la surface d'appui sont espacées l'une de l'autre dans un deuxième état de fonctionnement, en particulier dans le sens de la direction radiale (R), et
la température du tambour de frein (1) dans le premier état de fonctionnement est inférieure à celle dans le second état de fonctionnement.
